# EUROPÄISCHE PATENTSCHRIFT

(11) **EP 1 754 053 B1**
(45) Veröffentlichungstag und Bekanntmachung des Hinweises auf die Patenterteilung: **05.12.2012**
(21) Anmeldenummer: 05743147.0
(22) Anmeldetag: 10.05.2005
(51) Int. Cl.: G01N 30/60, G01N 30/56, B01D 15/08

(54) **OPEN TUBULAR KAPILLAREN MIT VERBINDUNGSSCHICHT**
OPEN TUBULAR CAPILLARIES COMPRISING A CONNECTION LAYER
CAPILLAIRES TUBULAIRES OUVERTS COMPORTANT UNE COUCHE DE CONNEXION

(30) Priorität: 09.06.2004 EP 04013549
(43) Veröffentlichungstag der Anmeldung: 21.02.2007
(73) Patentinhaber: Merck Patent GmbH, 64293 Darmstadt (DE)
(72) Erfinder: LUBDA, Dieter, 64625 Bensheim (DE); CABRERA, Karin, 63303 Dreieich (DE)
(86) Internationale Anmeldenummer: PCT/EP2005/005043
(87) Internationale Veröffentlichungsnummer: WO 2005/121775

(56) Entgegenhaltungen:
- US-A- 3 878 092
- US-A- 4 043 905
- US-A- 5 145 579
- US-A- 5 322 608
- US-A- 5 719 322
- US-A1- 2003 155 676
- US-A1- 2004 035 774
- PATENT ABSTRACTS OF JAPAN Bd. 017, Nr. 254 (P-1538), 19. Mai 1993 (1993-05-19) & JP 04 370760 A (HITACHI CABLE LTD), 24. Dezember 1992 (1992-12-24)

## Beschreibung

Die Erfindung betrifft ein Verfahren zur Herstellung von open tubular Kapillaren mit monolithischen Sorbenzien sowie die Kapillaren selbst. Die erfindungsgemäßen Kapillaren zeichnen sich durch eine Verbindungsschicht zwischen Kapillarwand und Sorbens aus, die für eine besonders gute Haftung des Sorbens an der Kapillarwand sorgt.

Open tubular (OT) Kapillaren sind Kapillaren, die nur an der Kapillarinnenwand mit einer Sorbensschicht belegt sind. Sie sind dadurch nicht vollständig mit Sorbens gefüllt und erlauben so wesentlich höhere Fließgeschwindigkeiten. Für gaschromatographische Anwendungen werden OT-Kapillaren bereits längere Zeit erfolgreich eingesetzt (Z. Ji, R.E. Majors, E.J. Guthrie,Journal of Chromatography, 842 (1999), 115-142). In der letzten Zeit wird der Einsatz von OT-Kapillaren auch für die Flüssigkeitschromatographie diskutiert. Beispielsweise beschreibt US 5,869,152 die Herstellung von OT-Kapillaren, die mit monolithischen Hybrid-Materialien als Sorbens belegt sind.

Es gelang jedoch bislang kaum, OT-Kapillaren herzustellen, die tatsächlich für den Einsatz in der Flüssigkeitschromatographie geeignet sind und für eine kommerzielle Verwertung ausreichend gute Eigenschaften zeigen.

Kenntnisse, die im Bereich der Flüssigkeitschromatographie bezüglich der Eigenschaften geeigneter Sorbenzien erlangt wurden, lassen sich größtenteils nicht auf OT-Kapillaren übertragen, da partikuläre Materialien nicht eingesetzt werden können. Bekannte monolithische Trägermaterialien, wie z.B. aus WO 95/03256 und WO 98/29350, schrumpfen bei der Herstellung und lösen sich von der Wand ab.

WO 99/38006 und WO 99/50654 offenbaren Verfahren zur Herstellung von Kapillaren, die mit monolithischem Silica-Material gefüllt sind. Dieses Material kann nach der Herstellung direkt in der Kapillare verbleiben, da bei gefüllten Kapillaren mit kleinem Innendurchmesser geringe Schrumpfungsraten unbedeutend sind.

Bei der Herstellung einer Beschichtung der Innenoberfläche der Kapillare dagegen wirken sich schon kleinste Schrumpfungsraten negativ aus, indem sich Risse in der Beschichtung oder sogar einzelne Sorbens-Schollen bilden.

Zudem stellt eine flüssigkeitschromatographische Anwendung ganz andere Anforderungen an eine Chromatographiesäule als die Gaschromatographie. Der größte Unterschied besteht natürlich darin, dass nicht Gase sondern Flüssigkeiten durch die Säule strömen. Flüssigkeiten haben andere, d.h. schlechtere Diffusionseigenschaften als Gase und beanspruchen je nach Flussrate das Sorbens auch mechanisch stärker. Daher zeigen alle bisher entwickelten OT-Kapillaren beim Einsatz in der Flüssigkeitschromatographie starke Nachteile. Insbesondere sind die Trenneigenschaften mangelhaft und die Standzeiten sehr kurz. Hauptursache dafür ist wahrscheinlich, dass die Sorbens-Beschichtung aus den oben genannten Gründen nicht ausreichend fest an der Kapillarwand haftet und entweder schon während der Herstellung Risse oder einzelne Sorbens-Schollen ausbildet und/oder dass der Flüssigkeitsstrom während der Benutzung der Kapillaren Teile der Beschichtung angreift und ab- oder auflöst. Trägt man weniger poröse Schichten mit dadurch geringerer Schrumpfungsrate auf, erhöht man zwar die mechanische Stabilität der Beschichtung, erhält aber Schichten mit schlechteren Trenneigenschaften.

Aufgabe der vorliegenden Erfindung war es daher, OT- Kapillaren zur Verfügung zustellen, die für den Einsatz in der Flüssigkeitschromatographie, insbesondere der HPLC, Mikro-LC oder der Elektrochromatographie geeignet sind, d.h. deren Sorbens-Schicht besonders stabil und gleichmäßig auf die Kapillarwand aufgebracht werden kann.

Es wurde gefunden, dass eine Verbindungsschicht zwischen Kapillarwand und Sorbens eine wesentlich bessere Haftung des Sorbens erzeugt und die Trenneigenschaften und Standzeiten der Kapillaren verbessert. Weiterhin wurde gefunden, dass Kapillaren mit besonders guten Trenneigenschaften und Standzeiten erzeugt werden können, wenn die Sorbensschicht mittels eines Aufwachsverfahrens aufgebracht wird.

Aus der US5,719,322 ist eine open tubular Kapillare mit einem Molekularsieb und einer Verbindungsschicht bestehend aus Aluminium oder Silica bekannt.

Aus der US3,878,092 ist eine open tubular Kapillare mit einem organischen Sorbens und einer Polymerverbindungsschicht bekannt.

Gegenstand der vorliegenden Erfindung ist eine OT-kapillaren gemäβ Anspruch 1

In einer anderen bevorzugten Ausführungsform ist die Verbindungsschicht 1 bis 5 µm dick.

In einer anderen bevorzugten Ausführungsform hat die Kapillare einen Innendurchmesser zwischen 20 und 1000 µm.

In einer anderen bevorzugten Ausführungsform ist die Kapillare eine Fused Silica Kapillare.

In einer bevorzugten Ausführungsform ist die Innenwand der Kapillare vollständig von der Verbindungsschicht bedeckt.

In einer anderen bevorzugten Ausführungsform enthält die Verbindungsschicht Fasern oder Partikel.

Gegenstand der vorliegenden Erfindung ist auch ein Verfahren gemäβ Anspruch 7

In einer bevorzugten Ausführungsform wird die Innenwand der Kapillare in einem Schritt aa) durch Behandlung mit starken Säuren, starken Basen oder anderen ätzenden Mitteln vor dem Aufbringen der Verbindungsschicht aktiviert.

In einer bevorzugten Ausführungsform wird zur Herstellung der Sorbensschicht ein Sol-Gel-Verfahren verwendet.

In einer besonders bevorzugten Ausführungsform erfolgt das Aufbringen der Sorbensschicht durch Einpumpen einer verdünnten Polymerisationslösung, die bis nach dem Ausgelieren in der Kapillare verbleibt.

Gegenstand der vorliegenden Erfindung sind auch OT-Kapillarsäulen hergestellt nach dem erfindungsgemäßen Verfahren.

Gegenstand der vorliegenden Erfindung ist ferner die Verwendung der erfindungsgemäßen Kapillarsäulen in der Flüssigkeitschromatographie.

Erfindungsgemäß geeignete Kapillaren haben einen Innendurchmesser zwischen 5 und 1500 *µ*m, bevorzugt zwischen 20 und 1000 *µ*m. Die Dicke der Verbindungsschicht und der Sorbensschicht wird typischerweise an den Innendurchmesser der Kapillare angepasst, d.h. bei kleineren Innendurchmessern wird eine etwas kleinere Verbindungs- und/oder Sorbensschicht gewählt, so dass im Kapillarinneren noch ein Hohlraum verbleibt. Die Länge der Kapillaren kann je nach Anwendung zwischen 1 cm und 100 Metern schwanken.

Die Kapillare kann aus Metall (z.B. Edelstahl) oder Kunststoff (z.B. PEEK (Polyetheretherketon), PTFE (Polytetrafluorethylen)) oder bevorzugt aus Materialien, die innen mit Glas beschichtet sind (z.B. Edelstahl mit Glas-Inliner), Keramik, Glas oder anderen Silica-Materialien, wie z.B. Fused Silica, bestehen. Der Fachmann ist in der Lage, die Auswahl aus diesen Materialien aufgrund der geplanten Anwendung, der Bedingungen für die Aktivierung der Oberfläche der Kapillare, der Reaktionsbedingungen und der eingesetzten Reaktanden zu treffen.

Für den Einsatz in der Flüssigkeitschromatographie werden die Kapillaren mit Anschlussstücken für den Elutionsmittel Zu- und Ablauf versehen. Geeignete Systeme sind dem Fachmann bekannt.

Kern der vorliegenden Erfindung ist die Einführung einer Verbindungsschicht zwischen der Innenwand der Kapillare und der Sorbensschicht. Es wurde gefunden, dass die Einführung einer Verbindungsschicht, die Bildung von Rissen in der Sorbensschicht stark verringert. Bevorzugt erfolgt dies, indem eine Verbindungsschicht eingesetzt wird, die
- die Anzahl der zur Anbindung der Sorbensschicht zur Verfügung stehenden funktionellen Gruppen erhöht
- und/oder die Innenoberfläche der Kapillare vergrößert
- und/oder reaktivere funktionelle Gruppen zur Anbindung der Sorbensschicht zur Verfügung stellt.

Die Verbindungsschicht kann erfindungsgemäß aus einem der folgenden Materialien bestehen:
- bifunktionellen Reagenzien
- anorganischen Polymeren
- anorganischen/organischen Hybridmaterialien
- organischen Polymeren

Erfindungsgemäß können statt einer Verbindungsschicht auch mehrere Verbindungsschichten aus identischen oder unterschiedlichen Materialien aufgetragen werden. Daher steht der Ausdruck "Verbindungsschicht" erfindungsgemäß für eine oder mehrere Schichten.

Eine Verbindungsschicht hat typischerweise eine Dicke zwischen 1 *µ*m und 20 *µ*m, bevorzugt zwischen 2 und 5 *µ*m.

Die Verbindungsschicht bedeckt bevorzugt die gesamte Innenoberfläche der Kapillare bzw. reagiert soweit möglich mit allen auf der Innenoberfläche zur Verfügung stehenden funktionellen Gruppen. In einigen Fällen kann es jedoch ausreichend sein, wenn die Verbindungsschicht die Kapillarinnenwand gleichmäßig, aber nur teilweise (mindestens 50%) oder wenn nur ein Teil (mindestens 50%) der funktionellen Gruppen der Kapillarinnenwand abreagiert haben. Auch eine nur teilweise bedeckte Oberfläche oder nur teilweise abreagierte funktionelle Gruppen zählen erfindungsgemäß als Verbindungsschicht.

Im folgenden werden die einzelnen geeigneten Materialien erläutert:

### 1. bifunktionelle Reagenzien

Hierbei wird die innere Oberfläche der Kapillare mit Reagenzien behandelt, die zumindest zwei, bevorzugt drei oder vier, Funktionalitäten aufweisen. Erfindungsgemäß werden geeignete Reagenzien mit mindestens zwei Funktionalitäten als bifunktionelle Reagenzien bezeichnet. Es wird angenommen, dass die Verminderung des Schrumpfens nach Behandlung der Oberfläche mit diesen Reagenzien daher rührt, dass mindestens eine Funktionalität mit der Oberfläche der Gelierform reagiert und mindestens eine Funktionalität zur Reaktion mit dem Monomersol zur Verfügung steht. Bevorzugt werden auf der Innenwand der Kapillare dendritische Strukturen aufgebaut, so dass sich die Zahl der funktionellen Gruppen, die zur Anbindung der Sorbensschicht zur Verfügung stehen, vergrößert. Geeignet sind dabei z.B. Alkoxysilane oder Organoalkoxysilane. Besonders bevorzugt sind:
- bis-funktionelle Silane der Formel I

   (RO)₁₋₃-Si-(CH₂)n-Si-(OR)₁₋₃ I

   wobei die Reste R unabhängig voneinander typischerweise ein Alkyl, Alkenyl oder Aryl- Rest sind, wie C1 bis C20 Alkyl, C2 bis C20 Alkenyl oder C5 bis C20 Aryl, bevorzugt ein C1 bis C8 Alkylrest und n = 0 bis 20, bevorzugt 0 bis 8, wobei eine oder mehrere nicht benachbarte Methylengruppen durch O, S, NH, NR, CONH (Amid), CO, COO, SO oder SO₂, bevorzugt durch O, S, NH oder CONH ersetzt sein können. Beispiele für bevorzugte Verbindungen sind BTME (Bis(trimethoxysilyl) ethan mit R = Methyl und n = 2)), Bis(triethoxysilyl)ethan, Bis(triethoxysilyl)methan und Bis(triethoxysilyl)octan.
- mono, di- oder trifunktionelle Alkoxysilane mit einer vierten endständigen Funktion der Formel II

   (RO)ₙR'ₘSi-R* II

   wobei R und R' typischerweise unabhängig voneinander ein Alkyl, Alkenyl oder Aryl- Rest ist, bevorzugt ein C1 bis C8 Alkylrest, und R* eine Si-OH-reaktive Gruppe, wie eine Amino- oder eine Epoxy-Gruppe aufweist. Das heißt, R* ist z.B. Alkylamino, Alkenylamino oder Arylamino, bevorzugt ein C1 bis C8 Alkylamino oder Glycidoxyalkyl, Glycidoxyalkenyl oder Glycidoxyaryl, bevorzugt C1 bis C8-Glycidoxyalkyl. m ist 0, 1 oder 2, n + m ergibt 3. Beispiele für geeignete Verbindungen der Formel II sind 3-Glycidoxypropyltrimethoxysilan, 3-Glycidoxypropylmethyldimethoxysilan oder 3-Glycidoxypropylmethyldiethoxysilan sowie 3-Aminopropylmethyldiethoxysilan, 3-Aminopropyldimethylethoxysilan oder bevorzugt 3-Aminopropyltriethoxysilan oder 3-Aminopropyltrimethoxysilan.

Die bifunktionellen Reagenzien werden typischerweise als 2 bis 25%ige, bevorzugt 5 bis 10%ige (Gew.%) Lösung in einem organischen Lösungsmittel wie z.B. Toluol eingesetzt. Die Behandlung der Kapillare erfolgt bevorzugt bei erhöhter Temperatur zwischen 50 und 150°C; z.B. wird in Toluol unter Rückfluß gekocht. Die Dauer der Behandlung beträgt in der Regel zwischen 1 bis 40 Stunden, typischerweise 10 bis 25 Stunden. Die Behandlung kann durch Eintauchen der gesamten Kapillare oder Spülen bzw. Befüllen des Inneren der Kapillare erfolgen. Zum Abschluss wird mit einem organischen Lösungsmittel gespült.

Der Einsatz von bifunktionellen Reagenzien kann auch mit den weiteren Methoden zur Einführung einer Verbindungsschicht kombiniert werden. Beispielsweise kann zunächst die Innenoberfläche durch Reaktion mit bifunktionellen Reagenzien unter Ausbildung einer dendritischen Struktur oder eines Netzwerks mit einer größeren Zahl funktioneller Gruppen versehen werden. In einem zweiten Schritt wird dann eine Verbindungsschicht aus einem organischen, anorganischen oder Hybridmaterial aufgebracht.

### 2. Verbindungsschicht aus einem organischen Polymer

Eine Verbindungsschicht aus einem organischen Polymer bietet den Vorteil, dass organischen Polymere zumeist nicht ganz so starr und rigide sind wie anorganische Polymere. Es wurde gefunden, dass daher eine Verbindungsschicht aus einem organischen Polymer wie eine Pufferschicht wirkt, die Spannungen ausgleichen kann und so eine Rissbildung des Sorbens verhindert.

Erfindungsgemäß geeignet sind alle organischen Polymere, die unter den Bedingungen der Flüssigchromatographie ausreichend stabil sind. Beispiele hierfür sind Polystyrole, Polyethylenoxide oder Polymethacrylate.

Da organische Polymere häufig nicht direkt mit den funktionellen Gruppen der Kapillarwand reagieren können, kann es notwendig sein, diese vorher mit einem bifunktionellen Reagenz umzusetzen, das einerseits mit der Kapillarwand reagiert und andererseits geeignete funktionelle Gruppen zur Anpolymerisation des organischen Polymers zur Verfügung stellt. Bei Fused Silica Kapillaren kann dies z.B. ein Silan sein, das mindestens einen nicht hydrolysierbaren Rest mit einer reaktiven Doppelbindung trägt, wie z.B. Methacryloxypropyl-trimethoxy-silan.

Genauso kann es notwendig sein, die Schicht des organischen Polymers vor dem Aufbringen der Sorbensschicht zunächst geeignet zu funktionalisieren. Auch hier können z.B. geeignete bifunktionelle Silane eingesetzt werden.

Die Schicht des organischen Polymers kann nach bekannten Methoden, z.B. mittels radikalischer Polymerisation, aufpolymerisiert werden. Genauso können der Polymerisationslösung Partikel oder Fasern, insbesondere Partikel aus einem organischen Polymer zugesetzt werden oder Partikel aus einem organischen Polymer auf andere Weise als Verbindungsschicht auf die Kapillarwand aufgebracht werden. Es können aber auch anorganische Partikel oder Fasern bzw. derivatisierte anorganische Partikel oder Fasern der Polymerisation zugesetzt werden.

### 3. Anorganische Polymere/Hybridmaterialien

Hierbei wird die Kapillare mit einer Lösung oder Aufschlämmung vorbehandelt. Die Lösung besteht aus einem Monomersol ähnlich dem, das später zur Bildung der Sorbensschicht verwendet wird, d.h. es enthält ebenso wie das Monomersol Alkoxysilane. Diese Alkoxysilane können mit der Innenoberfläche der Kapillare reagieren und dort auspolymerisiert und/oder aufgesintert werden. Auf diese Weise bildet sich eine Beschichtung der Innenoberfläche der Kapillare, die durch ihren Aufbau und ihre Struktur die Innenoberfläche vergrößert. Geeignete Alkoxysilane sind Tetraalkoxysilane (RO)₄Si, wobei R typischerweise ein Alkyl, Alkenyl oder Aryl- Rest ist, wie C1 bis C20 Alkyl, C2 bis C20 Alkenyl oder C5 bis C20 Aryl, bevorzugt ein C1 bis C8 Alkylrest. Besonders bevorzugt sind Tetraethoxy- und insbesondere Tetramethoxysilan. Genauso kann das Tetraalkoxysilan verschiedene Alkylreste enthalten. Statt in ihrer monomeren Form können die Alkoxysilane auch vorpolymerisiert als z.B. Oligomere eingesetzt werden.

In einer anderen Ausführungsform können statt eines Alkoxysilans oder Mischungen zweier oder mehrerer Alkoxysilane Organoalkoxysilane oder Mischungen von Organoalkoxysilanen mit Tetraalkoxysilanen eingesetzt werden. Geeignete Organoalkoxysilane sind solche, in denen ein bis drei, bevorzugt eine Alkoxygruppen eines Tetraalkoxysilans durch organische Reste, wie bevorzugt C1 bis C20 Alkyl, C2 bis C20 Alkenyl oder C5 bis C20 Aryl ersetzt sind. Weitere Organoalkoxysilane sind z.B. in WO 03/014450 oder US 4,017,528 offenbart. Statt in ihrer monomeren Form können die Alkoxysilane bzw. Organoalkoxysilane auch vorpolymerisiert als z.B. Oligomere eingesetzt werden.

Die Tetraalkoxysilane bzw. Organoalkoxysilane werden typischerweise als 2 bis 25%ige, bevorzugt 5 bis 10%ige (Gew.%) Lösung in einem organischen Lösungsmittel wie z.B. Toluol oder Ethanol eingesetzt. Auch Mischungen aus Wasser mit einem in Wasser mischbaren Lösungsmittel sind möglich. Die Behandlung der Kapillare erfolgt bevorzugt bei erhöhter Temperatur zwischen 30 und 150°C, z.B. wird in Toluol unter Rückfluss gekocht. Die Dauer der Behandlung beträgt in der Regel zwischen 1 bis 40 Stunden, typischerweise 10 bis 25 Stunden.

Einer Verbindungsschicht aus einem anorganischen oder Hybrid-Polymer können während der Herstellung auch anorganische, Hybrid-Material und/oder organische Partikel oder Fasern zugesetzt werden. Weiterhin kann die Verbindungsschicht auch ganz aus anorganischen und/oder Hybrid-Material Partikeln bestehen, die z.B. auf die Kapillarwand aufgesintert werden.

Die Stabilität und Wirkung der erfindungsgemäßen Verbindungsschichten kann durch folgende bevorzugte zusätzliche Maßnahmen unterstützt werden:

### 1. Anätzen

Dieses Verfahren ist insbesondere für Kapillaren aus Keramik, Glas oder anderen Materialien auf Silica-Basis geeignet. Hierbei wird zumindest die Innenoberfläche der Kapillare mit starken Säuren oder starken Basen oder anderen ätzenden Verbindungen angeätzt. Auf diese Weise entstehen z.B. vermehrt aktivierte Silanolgruppen an der Innenoberfläche der Kapillare, die reagieren können. Des weiteren kommt es mit starken Basen zu einer partiellen Anlösung der Silikatstruktur des Glases, was eine Oberflächenvergrößerung zur Folge hat.

Als starke Säuren oder Basen sind z.B. HF, HCl, HNO₃ oder H₂SO₄, NaOH, KOH, NH₄OH, bevorzugt HF und HCl bzw. NaOH, geeignet. Ebenso ist auch H₂O₂ in Kombination mit einer Säure oder Base geeignet. Die Dauer der Behandlung hängt vom Material der Kapillare ab. In der Regel werden die Formen bei Temperaturen zwischen 25°C und 80 °C zwischen 5 Minuten und 24 Stunden behandelt. Die Behandlung kann durch Eintauchen der gesamten Kapillare oder Spülen bzw. Befüllen des Inneren der Kapillare erfolgen. Abschließend wird bei Verwendung einer Base mit verdünnter Säure (zur Neutralisation), mit Wasser und schließlich mit einem organischen Lösungsmittel, wie z.B. Ethanol gespült bzw. im Falle der Säure mit Wasser und einem organischen Lösungsmittel gespült.

### 2. Zusatz von Partikeln und/oder Fasern

In einer anderen bevorzugten Ausführungsform enthält die Lösung zur Herstellung der Verbindungsschicht und/oder der Sorbensschicht zusätzlich Partikel und ist somit eine Partikelsuspension bzw. Aufschlämmung. Die Partikel haben typischerweise einen Durchmesser zwischen 25 nm und 10 µm, bevorzugt zwischen 50 nm und 1 µm und bestehen typischerweise aus Kunststoff, Keramik, Glas oder anorganischen Oxiden, wie z.B. Ti-, Al-, Zr- oder Si-Oxiden. Bevorzugt besitzen sie eine hydrophile Oberfläche. Aber auch hydrophobe oder hydrophob derivatisierte Partikel, z.B. mit C1 - C20 Akylresten sind besonders geeignet, wenn die Lösung zur Herstellung eines organischen Polymers dient oder aus Organoalkoxysilanen und oder Mischungen von Organoalkoxysilanen mit Alkoxysilanen besteht.

Die Partikel können unporös oder porös sein. Geeignet sind sphärische oder auch unregelmäßig geformte Partikel. Besonders bevorzugt sind Silica-Partikel mit einem Durchmesser zwischen 50 nm und 1 µm.

Eine weitere Möglichkeit, zur Verminderung der Schrumpfungsrate ist der Zusatz von Fasern zu der Verbindungsschicht und/oder der Sorbensschicht. Fasern sind erfindungsgemäß länglich geformte Strukturen, deren Länge zumindest 5 mal größer ist als ihr mittlerer Durchmesser. Die Fasern können im Durchmesser rund, oval, unregelmäßig geformt oder auch flach sein. Geeignete Fasern sind Mineralfasern oder Chemiefasern, wie insbesondere Glaskeramik- oder besonders bevorzugt Glasfasern. Die Fasern werden dem Monomersol bzw. der Polymerisationslösung in Mengen zwischen 1 und 50 Gew.%, bevorzugt 2-30%, zugesetzt. Durch die Wahl der Fasern (z.B. Glasfasern mit einer Länge von 0,1-5 mm (bevorzugt 0,3-3 mm) und einem Durchmesser von 1-25 µm (bevorzugt 5-10 µm)) kann die stabilisierende Wirkung angepasst werden.

Falls für die spätere Anwendung notwendig, können die Kapillaren nach dem Aufbringen der Verbindungsschicht noch erhitzt werden. Bei einer Beschichtung mit Tetraalkoxysilanen bzw. rein anorganischen Partikeln/Fasern kann bis 600°C calziniert werden. Falls Organoalkoxysilane oder Partikel/Fasern mit organischen Bestandteilen eingesetzt wurden, sollten die Temperaturen zwischen 100 und 300°C liegen, es sei denn die organischen Reste sollen ausgebrannt werden.

Genauso kann es notwendig sein, wie schon für die organischen Polymere erläutert, die Verbindungsschicht mit bifunktionellen Reagenzien umzusetzen, damit geeignete funktionelle Gruppen für die Anbindung der Sorbensschicht zur Verfügung stehen.

Die Sorbensschicht der Kapillare hat typischerweise eine Dicke zwischen 1 *µ*m und 20 *µ*m, bevorzugt zwischen 2 und 10 *µ*m.

Erfindungsgemäß geeignete Sorbenzien sind anorganische poröse monolithische Sorbenzien auf Basis von anorganischen Oxiden, wie z.B. Aluminiumoxid, Titandioxid oder bevorzugt Silica, oder Hybridmaterialien. Die Porenstruktur der Sorbensschicht ist monomodal oder bevorzugt bimodal. Auch tri- oder oligomodale Porenverteilungen sind möglich. Zumindest einige der Poren sollten einen Durchmesser zwischen 3 nm und 25 µm aufweisen, bevorzugt zwischen 5 nm und 10 µm damit eine ausreichende Diffusion der Analyten in das Sorbens und damit eine ausreichende Auftrennung gewährleistet ist. Besonders vorteilhaft ist eine bimodale Porenverteilung mit großen Makroporen (> 0,1 µm, bevorzugt > 1 µm), die eine gute Zugänglichkeit bewirken und Mesoporen zwischen 2 und 100 nm, die eine effektive Auftrennung bewirken. Bevorzugt werden anorganische poröse monolithische Materialien eingesetzt, die nach einem Sol-Gel Prozess hergestellt werden. In WO 95/03256 und besonders in WO 98/29350 werden erfindungsgemäß bevorzugte Verfahren zur Herstellung anorganischer monolithischer Formkörper nach einem Sol-Gel Prozess offenbart. Diese Materialien enthalten Mesoporen mit einem Durchmesser zwischen 2 und 100 nm und Makroporen mit einem mittleren Durchmesser von über 0,1 µm und sind somit für eine erfindungsgemäße Anwendung besonders gut geeignet.

Typischerweise werden als Edukte zur Ausbildung der anorganischen Sorbens-Schicht Silane eingesetzt. Beispiele sind in WO 95/03256 und WO 98/29350 offenbart. Es kann aber auch ein vorpolymerisiertes Silan, z.B. Polyethoxysilan eingesetzt werden. Dieses wird z.B. in einem Lösungsmittel wie Ethanol aufgenommen, auf die Kapillarwand aufgebracht, getrocknet und mit Ammoniak ausgehärtet.

Weiterhin geeignet sind anorganisch/organische Hybrid-Materialien. Dies können zum einen organisch/anorganische Co-Polymerisate sein oder Silica-Hybrid-Materialien, bei denen das Monomersol nicht nur Alkoxysilane sondern auch typischerweise zumindest 10%, bevorzugt 20 bis 100% Organoalkoxysilane enthält. Es wurde gefunden, dass der Einsatz von Organoalkoxysilanen zusätzlich eine Reduktion der Schrumpfung der Sorbensschicht bei der Alterung mit sich bringt und Sorbensschichten aus Organoalkoxysilanen weniger zu Rissen oder Schuppenbildung neigen. Organoalkoxysilane sind Silane, in denen ein bis drei Alkoxygruppen, bevorzugt eine Alkoxygruppe, eines Tetraalkoxysilans durch organische Reste, wie bevorzugt C1 bis C20 Alkyl, C2 bis C20 Alkenyl oder C5 bis C20 Aryl, besonders bevorzugt C1 bis C8 Alkyl, ersetzt sind. Weitere Organoalkoxysilane sind z.B. in WO 03/014450 oder US 4,017,528 offenbart.

Die weiteren Bestandteile des Monomersols entsprechen in der Regel denen des Standes der Technik. Es kann jedoch möglich sein, dass die Konzentration bestimmter Stoffe leicht variiert werden muss, da Organoalkoxysilane eine andere Polarität, Reaktivität oder auch Löslichkeit zeigen als Alkoxysilane und so beispielsweise die Phasentrennung bzw. die Ausbildung des Gelkörpers beeinflussen. So kann es beispielsweise vorteilhaft sein, dem Monomersol ein mit Wasser mischbares organisches Lösungsmittel zuzusetzen, um diese Effekte auszugleichen. Geeignet sind z.B. Ethanol oder bevorzugt Methanol, wobei das molare Verhältnis von Wasser zu Lösungsmittel typischerweise zwischen 10:1 und 1:5, bevorzugt zwischen 3:1 und 1:2, liegt.

Weiterhin hat es sich als vorteilhaft erwiesen, wenn dem Monomersol zur Hydrolyse statt der üblicherweise verwendeten Essigsäure eine stärkere Säure zugesetzt wird. Besonders geeignet ist 1 M HNO₃.

Bei der Verwendung von Organoalkoxysilanen kann weiterhin, je nachdem welche Porenverteilung die Sorbensschicht aufweisen soll, auf verschiedene Weise auf die Ausbildung der Poren Einfluß genommen werden.

Beispielsweise kann gegebenenfalls auf die Zugabe eines Porogens wie z.B. Polyethylenglycol verzichtet werden, da Organoalkoxysilane durch die organischen, nicht hydrolysierbaren Reste selbst die Ausbildung von makroporösen Strukturen im Formkörper bewirken.

Werden zusätzlich Mesoporen gewünscht, so kann ein Detergenz zugegeben werden, z.B. kationische Detergentien wie CTAB (CH₃(CH₂)₁₅N⁺(CH₃)₃Br⁻), nicht ionische Detergentien wie PEG (Polyethylenglykol), Brij 56 (CH₃(CH₂)₁₅-(OCH₂CH₂)₁₀-OH), Brij 58 (CH₃(CH₂)₁₅-(OCH₂CH₂)₂₀-OH) und Triton^{®} X-Detergentien (CH₃)₃CCH₂CH(CH₃)-C₆H₄O(CH₂CH₂O)ₓH mit x=8 (TX-114) oder x=10 (TX-100) oder Blockcopolymere wie Pluronic^{®} P-123 (EO)₂₀(propylene oxide, PO)₇₀(EO)₂₀ oder Tween^{®} 85 (Polyoxyethylene sorbitan trioleate), oder aber ein Alterungsverfahren durchgeführt werden wie z.B. in WO 95/03256 und besonders in WO 98/29350 (Zugabe einer thermisch zersetzbaren Substanz wie Harnstoff) offenbart. Ebenso können in das Monomersol suspendierte Partikel eine mesoporöse Struktur ergeben.

Gegenstand der vorliegenden Erfindung ist auch ein Verfahren zur Herstellung von Open tubular Kapillaren mit Verbindungsschicht, wobei die Kapillaren im Inneren zunächst mit zumindest einer Verbindungsschicht versehen werden und anschließend eine Sorbensschicht aufgebracht wird.

In einer bevorzugten Ausführungsform wird die Kapillare vor Einführung der Verbindungsschicht zunächst durch Anätzen oder Umsetzung mit bifunktionellen Reagenzien aktiviert.

Das Aufbringen der Verbindungsschicht und/oder der Sorbensschicht kann erfolgen, indem die entsprechende Reaktionslösung durch Eintauchen oder Spülen in die Kapillare eingebracht wird. Zur Herstellung der Schichten können verschiedene Verfahren, wie Verfahren zur z.B. radikalischen Polymerisation oder auch Sol-Gel-Verfahren, eingesetzt werden. Die Lösungen, die die Ausgangssubstanzen zur Herstellung der Monolithen enthalten, werden erfindungsgemäß, unabhängig von der Art wie sie polymerisiert oder geliert werden, als Lösungen oder Monomersol bezeichnet.

Es können Lösungen verwendet werden, die in ihrer Zusammensetzung denen zur Herstellung monolithischer Formkörper entsprechen, d.h. Lösungen, die relativ hohe Konzentrationen der einzelnen Reaktanden enthalten. Verwendet man derartige Lösungen, muss darauf geachtet werden, dass die Kapillare nicht vollständig durch das entstehende dreidimensionale Netzwerk zugesetzt wird. Das kann auf zweierlei Art erfolgen. Zum einen kann die Kapillare nur kurz mit der Lösung durchspült werden, so dass nur die Innenoberfläche benetzt wird. Das Entfernen der Reaktionslösung aus der Kapillare kann auch durch Herauspressen mittels eines Gasstroms oder Flüssigkeitsstroms erfolgen. Anschließend wird die in der Kapillare verbliebene Schicht ausgehärtet bzw. polymerisiert. Gegebenenfalls kann das Verfahren noch ein- oder mehrfach wiederholt werden, um die Schichtdicke zu vergrößern.

Zum anderen kann die Kapillare zunächst mit der Lösung befüllt werden und die Aushärtung bzw. Polymerisation begonnen werden. Bevor die Aushärtung vollständig ist, wird die angelierte Reaktionslösung mittels Druckluft (oder falls nötig Strömen von inerten Gasen) oder einem Flüssigkeitsstrom aus der Kapillare herausgedrückt, so dass nur in den Wandbereichen eine Schicht zurück bleibt, die dann vollständig ausgehärtet wird.

Bei beiden Verfahrensvarianten kann als Flüssigkeitsstrom eine inerte, bevorzugt nicht mischbare, Flüssigkeit eingesetzt werden oder eine Flüssigkeit mit einem zusätzlichen Reagenz, das den Film auf der Kapillarwand bei der Polymerisation und Fixierung unterstützt oder der Nachbehandlung der Schicht dient. Ein Beispiel für ein solches Reagenz ist Ammoniak bei Herstellung der Schicht nach einem Sol-Gel Verfahren.

Für das Aufbringen der Sorbensschicht wird das folgende Aufwachsverfahren bevorzugt:

Für dieses Verfahren werden weniger konzentrierte Lösungen eingesetzt als die Lösungen, die zur Herstellung von monolithischen Formkörpern geeignet sind. Da poröse monolithische Formkörper (wie z.B. aus WO 95/03256, WO 98/29350, WO 99/38006 oder WO 99/50654) bereits typischerweise eine Porosität von über 70% haben, kann die Konzentration der Reaktanden nicht beliebig herabgesetzt werden. Typischerweise werden die Lösungen 1:2 bis 1:10 verdünnt eingesetzt.

Beispielsweise können bei der Verwendung von Silanen wie Tetramethoxysilan neben anderen Reagenzien Lösungen von 25 ml Silan in 75 bis 200 ml Essigsäure eingesetzt werden.

Die Kapillare wird das durch Eintauchen oder Einfüllen vollständig mit der Reaktionslösung befüllt und das Auspolymerisieren bzw. Aushärten gestartet. Es wurde gefunden, dass sich durch die niedrige Konzentration an Reaktanden kein dreidimensionales Netzwerk mehr aufbaut, das die gesamte Kapillare ausfüllt. Vielmehr konzentrieren sich die Monomere an die Kapillarwand auf und reagieren dort unter Ausbildung einer gleichmässigen Schicht ab. Das erfindungsgemäße Aufwachsverfahren ist besonders geeignet zur Bildung der Sorbensschicht, da es besonders gut gelingt, wenn die Innenwand der Kapillaren bereits durch Aufbringen einer Verbindungsschicht aktiviert ist.

Nach erfolgter Auspolymerisation an der Innenwand der Kapillare, wird die überschüssige Reaktionslösung (hauptsächlich noch das verbliebene Lösungsmittel) entfernt und die entstandene Schicht getrocknet oder falls nötig zur weiteren Aushärtung oder Funktionalisierung geeignet nachbehandelt. Wenn nötig kann das Aufwachsverfahren auch ein- oder mehrfach wiederholt werden.

In Abhängigkeit von der Art der Verbindungsschicht oder des verwendeten Sorbens kann insbesondere bei nach einem Sol-Gel Verfahren hergestellten Sorbens-Schichten nach dem Ausgelieren und dem Altern des Gel ein Calzinierungsschritt durchgeführt werden. Dadurch werden alle in der Schicht verbliebenen organischen Verbindungen oder Reste entfernt. Auch bei dem Einsatz von Organoalkoxysilanen im Monomersol kann im letzten Syntheseschritt calziniert werden, so dass die organischen Reste aus der Schicht entfernt werden und eine komplett anorganische Schicht erhalten wird. Insbesondere bei der Verwendung von Organoalkoxysilanen mit sterisch großen organischen Resten kann dies zur Erzeugung von Poren genutzt werden. Die Calzinierung erfolgt in der Regel bei Temperaturen zwischen 300 und 600°C. Genauso ist es aber auch möglich, auf den Calzinierungsschritt zu verzichten oder aber die Temperatur so zu wählen, dass die organischen Reste nicht angegriffen werden. Auf diese Weise besteht die Möglichkeit, durch die organischen. Reste die Materialeigenschaften der Schichten z.B. bezüglich ihrer chromatographischen Trenneigenschaften zu beeinflussen. Typischerweise liegen die Temperaturen in diesem Fall zwischen 100 und 300°C.

In der Regel werden die Kapillaren nach der Alterung bzw. Calzinierung für den Einsatz in der Chromatographie zusätzlich mit Separationseffektoren versehen. Die verschiedenen Separationeffektoren und Methoden zu ihrer Einführung sind dem Fachmann bekannt. Beispiele finden sich z.B. in WO 98/29350.

Die erfindungsgemäßen Kapillaren, insbesondere die nach dem bevorzugten erfindungsgemäßen Aufwachsverfahren hergestellten Kapillaren, zeichnen sich durch eine gleichmäßige Sorbensschicht und gute Trenneigenschaften aus. Durch die erfindungsgemäße kovalente Anbindung einer Verbindungsschicht an die Kapillarinnenwand und die kovalent mit der Verbindungsschicht verbundene Sorbensschicht sowie die aufgeführten bevorzugten Ausführungsformen kann eine Riss- und Schollenbildung vermieden werden.

Welche Art der Art der Verbindungsschicht mit welcher Art von Sorbensschicht zu kombinieren ist, hängt vom Material der Kapillare und der geplanten Anwendung der Kapillare ab.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, insbesondere der korrespondierenden Anmeldung EP 04 013 549, eingereicht am 09.06.2004, ist durch Bezugnahme in diese Anmeldung eingeführt.

### Beispiele

Für die folgenden Beispiele werden Kapillaren (fused silica) mit einem Innendurchmesser von 50 oder 100 µm und einem Aussendurchmesser von ca. 360 µm verwendet.

### 1. Vorbehandlung der Kapillare

Aktivierung (Reinigung) der Oberfläche z.B. durch Auswaschen mit einem Lösungsmittel (Ethanol oder Heptan) oder durch Behandlung mit 1 N NaOH (Wasser spülen) und 1 N HCl bei 40°C für 2 Stunden (anschließend wieder mit Wasser spülen).

### 2. Belegung mit einer Verbindungsschicht

### A Verbindungsschicht aus SiO₂

Es werden 2,08 g (0,01 mol) Tetraethoxysilan (TES) in einem Verhältnis von 1:10 mit Ethanol gemischt. Zu der Mischung wird 0,06 mol NH₃ addiert und gerührt bis sich eine homogene Mischung ergibt. Die Mischung wird in die Kapillare gepumpt und bei 60°C für 5 Stunden gelagert. Die Lösung wird aus der Kapillare mit einer Wasser/Ethanol 1:1 Mischung und anschließend mit Wasser ausgetauscht. Es hat sich eine ca. 1-5 µm dicke SiO₂ Schicht gebildet. Trocknung 4h Vakuum bei 80°C.

### B Verbindungsschicht aus Hybridmaterialien

### a)

Es werden 0,06 mol TES (= 12,5g) mit 0,02mol Methyltrimethoxysilan (MTMS) (= 2,7g) in 50ml Ethanol Wasser 1:1 gemischt und 0,03 mol Ammoniak addiert. Nachdem sich die Mischung durch Rühren homogenisiert hat (Raumtemperatur) wird die homogene Mischung in die Kapillare gespritzt und bei 40°C für 10 Stunden in der Kapillare belassen. Die Lösung wird aus der Kapillare mit einer Wasser/Ethanol 1:1 Mischung und anschließend mit Wasser ausgetauscht. Es hat sich eine ca. 1-3µm dicke Hybrid SiO₂ Schicht gebildet. Trocknung 4h Vakuum bei 80°C

### b)

Es werden 0,02 mol Methyltrimethoxysilan (MTMS) = 2,7g in 10ml Ethanol Wasser 1:1 gemischt und 0,5 g 1 M HNO₃ addiert. Nachdem sich die Mischung durch Rühren homogenisiert hat (Raumtemperatur) wird die homogene Mischung in die Kapillare gespritzt und bei 40°C für 10 Stunden in der Kapillare belassen. Die Lösung wird aus der Kapillare mit einer Wasser/Ethanol 1:1 Mischung und anschließend mit Wasser ausgetauscht. Es hat sich eine ca. 1-3 µm dicke MTMS Schicht gebildet. Trocknung 4h Vakuum bei 80°C

### C Verbindungsschicht aus einem Polymer

Eine Kapillare mit 100µm Innendurchmesser wird mit einer Mischung aus 5% Methacryloxypropyl-trimethoxy-silan in Ethanol gefüllt und über Nacht bei Raumtemperatur stehen gelassen. Die Lösung wird aus der Kapillare mit Ethanol ausgetauscht und mit Stickstoff und bei 60°C (12 Stunden) im Trockenschrank nachgetrocknet. In die vorbehandelte Kapillare wird eine Mischung Styrol:Divinylbenzol 0,1mol:0,1mol und 50mg AIBN (Radikalstarter) in 10ml Ethanol eingespritzt. Nach ca. 10 Minuten wird die Reaktionslösung mit einem schwachen Stickstoffstrom herausgedrückt und die Kapillare sofort in einem Ofen mit 80°C gelegt. Nachdem die Kapillare mit Ethanol ausgewaschen wird, hat sich eine ca. 1-3µm dicke Polymerschicht gebildet. Trocknung 4h Vakuum bei 80°C

### 3. Ausbildung der Sorbensschicht

In eine mit Verbindungsschicht versehene Kapillare wird eine Lösung aus 2,5 ml Tetramethoxysilan, 1,02 g Polyethylenoxid (Molekulargewicht 10.000-35.000 g/mol) und 0,9 g Harnstoff in 10 ml 0,01 N Essigsäure gegeben und bei 40°C für mindestens 10 Stunden in der Kapillare belassen. Die Lösung wird aus der Kapillare mit einer Wasser/Ethanol 1:1 Mischung und anschließend mit Wasser ausgetauscht. Es hat sich eine ca. 3-10 µm dicke poröse SiO₂- Schicht gebildet. Trocknung 4h Vakuum bei 80°C. Eine vorsichtige Kalzinierung bei 300°C stabilisiert die Schicht.

## Patentansprüche

1. Open tubular Kapillare mit mindestens einer Verbindungsschicht zwischen Kapillarinnenwand und Sorbens, **dadurch gekennzeichnet, dass** die Verbindungsschicht aus einem der folgenden Materialien besteht:
- bifunktionellen Reagenzien ausgewählt aus der Gruppe
• bis-funktionelle Silane der Formel I
(RO)₁₋₃-Si-(CH₂)ₙ-Si-(OR)₁₋₃ I
wobei die Reste R unabhängig voneinander ein C1 bis C20 Alkyl-, C2 bis C20 Alkenyl- oder C5 bis C20 Aryl-Rest sind,
wobei eine oder mehrere nicht benachbarte Methylengruppen durch O, S, NH, NR, CONH (Amid), CO, COO, SO oder SO₂ ersetzt sein können;
• mono, di- oder trifunktionelle Alkoxysilane mit einer vierten endständigen Funktion der Formel II
(RO)ₙR'ₘSi-R* II
wobei R und R' unabhängig voneinander ein C1 bis C8 Alkylrest ist, und R* eine Si-OH-reaktive Gruppe aufweist, m ist 0, 1 oder 2, n + m ergibt 3;
- Tetraalkoxysilanen (RO)₄Si, wobei R C1 bis C20 Alkyl, C2 bis C20 Alkenyl oder C5 bis C20 Aryl ist
- Organoalkoxysilanen oder Mischungen von Organoalkoxysilanen mit Tetraalkoxysilanen
- organischen Polymeren
und dass das Sorbens ein anorganisches poröses monolithisches Sorbens auf Basis von anorganischen Oxiden oder ein anorganisch/organisches Hybridmaterial ist.

2. Open tubular Kapillare nach Anspruch 1, **dadurch gekennzeichnet, dass** die Verbindungsschicht 1 bis 5 µm dick ist.

3. Open tubular Kapillare nach Anspruch 1 oder 2, **dadurch gekennzeichnet, dass** die Kapillare einen Innendurchmesser zwischen 20 µm und 1 mm hat.

4. Open tubular Kapillare nach einem oder mehreren der Ansprüche 1 bis 3, **dadurch gekennzeichnet, dass** die Kapillare eine Fused Silica Kapillare ist.

5. Open tubular Kapillare nach einem oder mehreren der Ansprüche 1 bis 4, **dadurch gekennzeichnet, dass** die Innenwand der Kapillare vollständig von der Verbindungsschicht bedeckt ist.

6. Open tubular Kapillare nach einem oder mehreren der Ansprüche 1 bis 5, **dadurch gekennzeichnet, dass** die Verbindungsschicht Fasern oder Partikel enthält.

7. Verfahren zur Herstellung von Open tubular Kapillaren, bei denen sich zwischen Kapillarinnenwand und Sorbens eine Verbindungsschicht befindet, **gekennzeichnet durch** folgende Verfahrensschritte
a) Bereitstellen einer Kapillare
b) Aufbringen mindestens einer Verbindungsschicht bestehend aus einem der folgenden Materialien:
- bifunktionellen Reagenzien ausgewählt aus der Gruppe
• bis-funktionelle Silane der Formel I
(RO)₁₋₃-Si-(CH₂)ₙ-Si-(OR)₁₋₃ I
wobei die Reste R unabhängig voneinander ein C1 bis C20 Alkyl-, C2 bis C20 Alkenyl- oder C5 bis C20 Aryl-Rest sind,
wobei eine oder mehrere nicht benachbarte Methylengruppen **durch** O, S, NH, NR, CONH (Amid), CO, COO, SO oder SO₂ ersetzt sein können;
• mono, di- oder trifunktionelle Alkoxysilane mit einer vierten endständigen Funktion der Formel II
(RO)ₙR'ₘSi-R* II
wobei R und R' unabhängig voneinander ein C1 bis C8 Alkylrest ist, und R* eine Si-OH-reaktive Gruppe aufweist, m ist 0, 1 oder 2, n + m ergibt 3;
- Tetraalkoxysilanen (RO)₄Si, wobei R C1 bis C20 Alkyl, C2 bis C20 Alkenyl oder C5 bis C20 Aryl ist
- Organoalkoxysilanen oder Mischungen von Organoalkoxysilanen mit Tetraalkoxysilanen
- organischen Polymeren
c) Aufbringen der Sorbensschicht, wobei das Sorbens ein anorganisches poröses monolithisches Sorbens auf Basis von anorganischen Oxiden oder ein anorganisch/organisches Hybridmaterial ist.

8. Verfahren nach Anspruch 7, **dadurch gekennzeichnet, dass** die Innenwand der Kapillare in einem Schritt aa) durch Behandlung mit starken Säuren, starken Basen oder anderen ätzenden Mitteln vor dem Aufbringen der Verbindungsschicht aktiviert wird.

9. Verfahren nach Anspruch 7 oder 8, **dadurch gekennzeichnet, dass** zur Herstellung der Sorbensschicht ein Sol-Gel-Verfahren verwendet wird.

10. Verfahren nach einem oder mehreren der Ansprüche 7 bis 9, **dadurch gekennzeichnet, dass** das Aufbringen der Sorbensschicht durch Einfüllen einer verdünnten Polymerisationslösung erfolgt.

11. Open tubular Kapillarsäulen hergestellt nach dem Verfahren entsprechend einem oder mehreren der Ansprüche 7 bis 10.

12. Verwendung der Kapillarsäulen nach einem oder mehreren der Ansprüche 1 bis 6 in der Flüssigkeitschromatographie.

## Claims

1. Open tubular capillary having at least one connecting layer between capillary inside wall and sorbent, **characterised in that** the connecting layer consists of one of the following materials:
- bifunctional reagents selected from the group
• bisfunctional silanes of the formula I
(RO)₁₋₃-Si-(CH₂)ₙ-Si-(OR)₁₋₃ I
where the radicals R are, independently of one another, a C1 to C20 alkyl, C2 to C20 alkenyl or C5 to C20 aryl radical, where one or more non-adjacent methylene groups may be replaced by O, S, NH, NR, CONH (amide), CO, COO, SO or SO₂;
• mono-, bi- or trifunctional alkoxysilanes having a fourth terminal function of the formula II
(RO)ₙR'ₘSi-R* II
where R and R' are, independently of one another, a C1 to C8 alkyl radical, and R* contains an Si-OH-reactive group, m is 0, 1 or 2, n + m is 3;
- tetraalkoxysilanes (RO)₄Si, where R is C1 to C20 alkyl, C2 to C20 alkenyl or C5 to C20 aryl
- organoalkoxysilanes or mixtures of organoalkoxysilanes with tetraalkoxysilanes
- organic polymers
and **in that** the sorbent is an inorganic porous monolithic sorbent based on inorganic oxides or an inorganic/organic hybrid material.

2. Open tubular capillary according to Claim 1, **characterised in that** the connecting layer has a thickness of 1 to 5 µm.

3. Open tubular capillary according to Claim 1 or 2, **characterised in that** the capillary has an internal diameter between 20 µm and 1 mm.

4. Open tubular capillary according to one or more of Claims 1 to 3, **characterised in that** the capillary is a fused-silica capillary.

5. Open tubular capillary according to one or more of Claims 1 to 4, **characterised in that** the inside wall of the capillary is completely covered by the connecting layer.

6. Open tubular capillary according to one or more of Claims 1 to 5, **characterised in that** the connecting layer comprises fibres or particles.

7. Process for the production of open tubular capillaries, in which a connecting layer is located between capillary inside wall and sorbent, **characterised by** the following process steps:
a) provision of a capillary
b) application of at least one connecting layer consisting of one of the following materials:
- bifunctional reagents selected from the group
• bisfunctional silanes of the formula I
(RO)₁₋₃-Si-(CH₂)ₙ-Si-(OR)₁₋₃ I
where the radicals R are, independently of one another, a C1 to C20 alkyl, C2 to C20 alkenyl or C5 to C20 aryl radical, where one or more non-adjacent methylene groups may be replaced by O, S, NH, NR, CONH (amide), CO, COO, SO or SO₂;
• mono-, bi- or trifunctional alkoxysilanes having a fourth terminal function of the formula II
(RO)ₙR'ₘSi-R* II
where R and R' are, independently of one another, a C1 to C8 alkyl radical, and R* contains an Si-OH-reactive group, m is 0, 1 or 2, n + m is 3;
- tetraalkoxysilanes (RO)₄Si, where R is C1 to C20 alkyl, C2 to C20 alkenyl or C5 to C20 aryl
- organoalkoxysilanes or mixtures of organoalkoxysilanes with tetraalkoxysilanes
- organic polymers
c) application of the sorbent layer, where the sorbent is an inorganic porous monolithic sorbent based on inorganic oxides or an inorganic/organic hybrid material.

8. Process according to Claim 7, **characterised in that** the inside wall of the capillary is activated in a step aa) before application of the connecting layer by treatment with strong acids, strong bases or other etching agents.

9. Process according to Claim 7 or 8, **characterised in that** a sol-gel process is used for the production of the sorbent layer.

10. Process according to one or more of Claims 7 to 9, **characterised in that** the sorbent layer is applied by introduction of a dilute polymerisation solution.

11. Open tubular capillary columns produced by the process corresponding to one or more of Claims 7 to 10.

12. Use of the capillary columns according to one or more of Claims 1 to 6 in liquid chromatography.

## Revendications

1. Capillaire tubulaire ouvert comportant au moins une couche de connexion entre une paroi interne de capillaire et un sorbant, **caractérisé en ce que** la couche de connexion est constituée par l'un des matériaux qui suivent :
- des réactifs bifonctionnels choisis parmi le groupe
• des silanes bifonctionnels de la formule I
(RO)₁₋₃-Si-(CH₂)ₙ-Si-(OR)₁₋₃ I
dans laquelle les radicaux R sont, indépendamment l'un de l'autre, un radical C1 à C20 alkyle, C2 à C20 alkényle ou C5 à C20 aryle, où un ou plusieurs groupes méthylène non adjacents peut/peuvent être remplacé(s) par O, S, NH, NR, CONH (amide), CO, COO, SO ou SO₂;
• des alcoxysilanes mono-, bi- ou trifonctionnels comportant une quatrième fonction terminale de la formule II
(RO)ₙR'ₘSi-R* II
dans laquelle R et R' sont, indépendamment l'un de l'autre, un radical C1 à C8 alkyle, et R* contient un groupe Si-OH-réactif, m est 0, 1 ou 2, n + m est 3 ;
- des tétraalcoxysilanes (RO)₄Si, où R est C1 à C20 alkyle, C2 à C20 alkényle ou C5 à C20 aryle
- des organoalcoxysilanes ou des mélanges d'organoalcoxysilanes avec des tétraalcoxysilanes
- des polymères organiques
et **en ce que** le sorbant est un sorbant monolithique poreux inorganique basé sur des oxydes inorganiques ou un matériau hybride inorganique/organique.

2. Capillaire tubulaire ouvert selon la revendication 1, **caractérisé en ce que** la couche de connexion présente une épaisseur de 1 à 5 µm.

3. Capillaire tubulaire ouvert selon la revendication 1 ou 2, **caractérisé en ce que** le capillaire présente un diamètre interne entre 20 µm et 1 mm.

4. Capillaire tubulaire ouvert selon une ou plusieurs des revendications 1 à 3, **caractérisé en ce que** le capillaire est un capillaire en silice fondue.

5. Capillaire tubulaire ouvert selon une ou plusieurs des revendications 1 à 4, **caractérisé en ce que** la paroi interne du capillaire est complètement recouverte par la couche de connexion.

6. Capillaire tubulaire ouvert selon une ou plusieurs des revendications 1 à 5, **caractérisé en ce que** la couche de connexion comprend des fibres ou des particules.

7. Procédé pour la production de capillaires tubulaires ouverts, dans lequel une couche de connexion est située entre une paroi interne de capillaire et un sorbant, **caractérisé par** les étapes de procédé qui suivent :
a) fourniture d'un capillaire
b) application d'au moins une couche de connexion constituée par l'un des matériaux qui suivent :
- des réactifs bifonctionnels choisis parmi le groupe
• des silanes bifonctionnels de la formule I
(RO)₁₋₃-Si-(CH₂)ₙ-Si-(OR)₁₋₃ I
dans laquelle les radicaux R sont, indépendamment l'un de l'autre, un radical C1 à C20 alkyle, C2 à C20 alkényle ou C5 à C20 aryle, où un ou plusieurs groupes méthylène non adjacents peut/peuvent être remplacé(s) par O, S, NH, NR, CONH (amide), CO, COO, SO ou SO₂;
• des alcoxysilanes mono-, bi- ou trifonctionnels comportant une quatrième fonction terminale de la formule II
(RO)ₙR'ₘSi-R* II
dans laquelle R et R' sont, indépendamment l'un de l'autre, un radical C1 à C8 alkyle, et R* contient un groupe Si-OH-réactif, m est 0, 1 ou 2, n + m est 3 ;
- des tétraalcoxysilanes (RO)₄Si, où R est C1 à C20 alkyle, C2 à C20 alkényle ou C5 à C20 aryle
- des organoalcoxysilanes ou des mélanges d'organoalcoxysilanes avec des tétraalcoxysilanes
- des polymères organiques
c) application de la couche de sorbant, où le sorbant est un sorbant monolithique poreux inorganique basé sur des oxydes inorganiques ou un matériau hybride inorganique/organique.

8. Procédé selon la revendication 7, **caractérisé en ce que** la paroi interne du capillaire est activée au niveau d'une étape aa) avant l'application de la couche de connexion par traitement avec des acide forts, des bases fortes ou d'autres agents de gravure.

9. Procédé selon la revendication 7 ou 8, **caractérisé en ce qu'**un processus sol-gel est utilisé pour la production de la couche de sorbant.

10. Procédé selon une ou plusieurs des revendications 7 à 9, **caractérisé en ce que** la couche de sorbant est appliquée par introduction d'une solution de polymérisation diluée.

11. Colonnes capillaires tubulaires ouvertes produites par le procédé correspondant à une ou plusieurs des revendications 7 à 10.

12. Utilisation des colonnes capillaires selon une ou plusieurs des revendications 1 à 6 en chromatographie liquide.
